# EUROPEAN PATENT SPECIFICATION

(11) **EP 1 732 190 B1**
(45) Date of publication and mention of the grant of the patent: **06.02.2008**
(21) Application number: 05719226.2
(22) Date of filing: 17.02.2005
(51) Int. Cl.: H02G 15/22, H01B 12/02, H02G 15/34, H01R 4/68

(54) **TERMINAL STRUCTURE OF MULTIPHASE SUPERCONDUCTING CABLE**
ENDVERSCHLUSSSTRUKTUR EINES MEHRPHASIGEN SUPRALEITENDEN KABELS
STRUCTURE TERMINALE D' UN CABLE SUPRACONDUCTEUR POLYPHASE

(30) Priority: 04.03.2004 JP 2004060763
(43) Date of publication of application: 13.12.2006
(73) Proprietor: Sumitomo Electric Industries, Ltd., Osaka-shi, Osaka 541-0041 (JP)
(72) Inventor: ASHIBE, Yuuichi, Osaka-shi, Osaka (JP)
(74) Representative: Kreutzer, Ulrich
(86) International application number: PCT/JP2005/002424
(87) International publication number: WO 2005/086306

(56) References cited:
- EP-A- 0 780 926
- JP-A- 6 295 625
- JP-A- 11 262 162

## Description

### Technical Field

The present invention relates to a terminal structure of a multiphase superconducting cable, the terminal structure being provided between an end of the multiphase superconducting cable and a room temperature side. More particularly, the invention relates to a terminal structure of a multiphase superconducting cable including a plurality of concentrically disposed superconducting layers in which currents of different phases are allowed to flow.

### Background Art

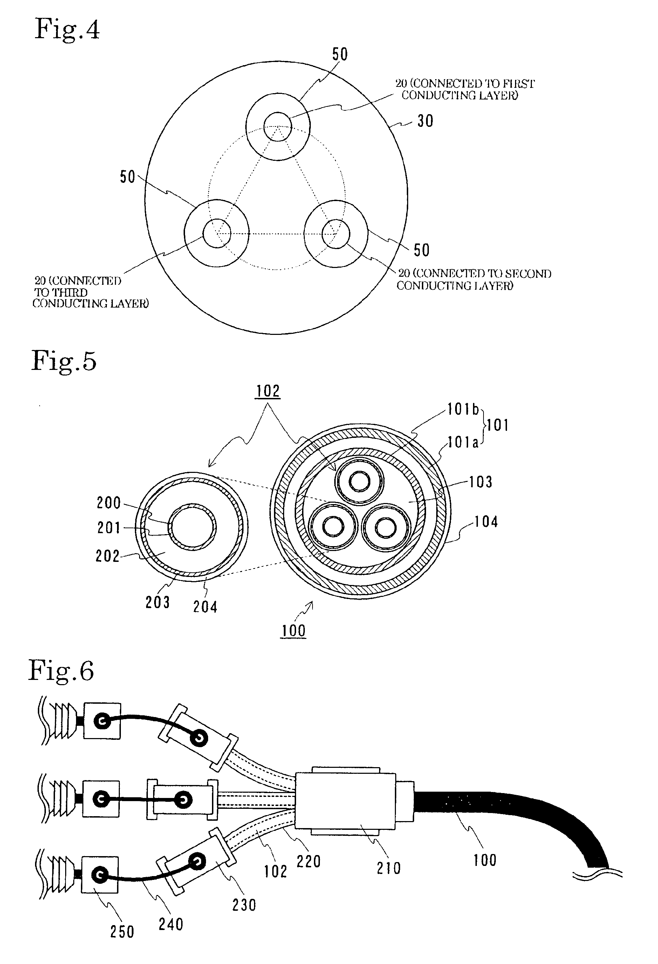

In the past, in the field of superconducting cables having superconducting layers composed of Bi-based high-Tc superconducting tape wires or the like, some development has been made with respect to not only single-phase cables including a single cable core but also multiphase cables including a plurality of cable cores. One example of such multiphase cables is a multicore-in-one-type cable in which a plurality of cable cores are assembled into one unit. Figure 5 is a cross-sectional view of a three-core-in-one-type three-phase superconducting cable. Hereinafter, the same reference numerals denote the same elements in the drawings. A superconducting cable 100 has a configuration including three cable cores 102 stranded and accommodated in a thermal insulation pipe 101. The thermal insulation pipe 101 has a double pipe structure including an outer pipe 101a and an inner pipe 101b, a heat insulator (not shown) being disposed in a space between the outer and inner pipes, which space is evacuated. An anticorrosion layer 104 is provided around the periphery of the thermal insulation pipe 101. Each cable core 102 includes a former 200, a superconducting layer 201, an electrical insulation layer 202, a cable shielding layer 203, and a protective layer 204, which are disposed in the enumerated order from the center. A space 103 between the inner pipe 101b and the cable core 102 serves as a channel for a coolant, such as liquid nitrogen.

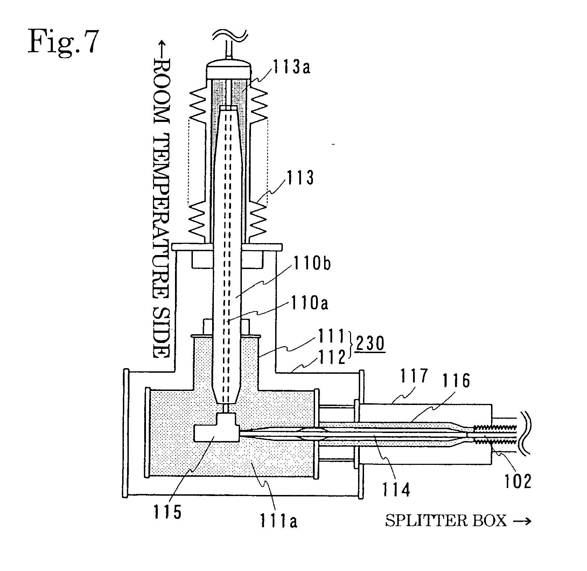

Figure 6 is a schematic diagram showing a splice structure of a three-core-in-one-type three-phase superconducting cable, for connection with a room temperature side, and Fig. 7 is a schematic diagram showing a terminal structure of the cable. In the multicore-in-one-type multiphase cable, a splice structure for connection with the room temperature side is provided for each phase. Specifically, as shown in Fig. 6, the splice structure includes a splitter box 210 for splitting the end of a superconducting cable 100 into individual phases (cable cores 102), thermal insulation pipes 220 for accommodating the individual cores 102 drawn out from the splitter box 210, and termination splice boxes 230 into which the ends of the cores 102 are introduced. The respective core 102 introduced into each termination splice box 230 is connected to a conductor 110a extending toward a room temperature side (refer to Fig. 7), the conductor 110a is connected to a room temperature side splice box 250 through a connecting cable 240, thus enabling power transmission between the cryogenic temperature side and the room temperature side.

As shown in Fig. 7, the terminal structure includes the end of the cable core 102, the conductor 110a for electrically connecting the core 102 existing at cryogenic temperature to the room temperature side, a termination splice box 230, and a porcelain tubular insulator 113 disposed at the room temperature side of the vacuum vessel 112, wherein the termination splice box 230 is composed of a refrigerant tank 111, which accommodates an end (the end to be connected with the core 102) of the conductor 110a, and a vacuum vessel 112 covering the outer periphery of the refrigerant tank 111. In the configuration shown in Fig. 7, a conductive current lead bar 114 is connected to the end of the cable core 102, and the superconducting layer and the conductor 110a are electrically connected to each other through the current lead bar 114 and a joint 115. The conductor 110a, which is usually composed of copper, aluminum, or the like, is encased in an insulating bushing 110b formed of fiberglass-reinforced plastic (FRP) or the like and extends from the refrigerant tank 111 through the vacuum vessel 112 to the porcelain tubular insulator 113. The refrigerant tank 111 is filled with a refrigerant 111a, such as liquid nitrogen, which cools one end (an end to be connected with the joint 115) of the current lead bar 114 and one end (same as above) of the conductor 110. The porcelain tubular insulator 113 accommodates the other end (at the room temperature side) of the conductor 110a and is filled with a dielectric fluid 113a, such as sulfur hexafluoride (SF₆) or an insulating oil. A current lead bar coolant vessel 116 is disposed around the current lead bar 114, and a current lead bar vacuum vessel 117 is disposed around the current lead bar coolant vessel 116 (refer to Patent Document 1).

Patent Document 1: Japanese Unexamined Patent Application Publication No. 2002-238144

### Disclosure of Invention

### Problems to be Solved by the Invention

In the splice structure at the end of the multicore-in-one-type multiphase cable, as described above, the terminal structure is formed for each phase by splitting into individual phases through the splitter box. Consequently, the whole structure becomes large, and the down-sizing of the structure has been sought.

A terminal for connecting a superconducting multiphase cable to a room temperature electrical equipment is known from EP 0 780 926 A.

Accordingly, it is a main object of the present invention to provide a multiphase superconducting cable terminal structure in which the size of the splice structure at the cable end can be further reduced.

### Means for Solving the Problems

In the present invention, the object described above is achieved by using a so-called "coaxial-type" multiphase cable instead of a multicore-in-one-type multiphase cable.

Namely, a terminal structure of a multiphase superconducting cable according to the present invention comprises a refrigerant tank filled with a refrigerant for cooling the ends of the superconducting cable including a plurality of concentrically disposed superconducting layers for flowing currents of different phases, which superconducting layers are separated from each other by a conductor-insulation layer provided between them. Leads are electrically connected to the ends of the individual superconducting layers. An insulating member is disposed around the peripheries of the leads, and the insulating member seals the refrigerant in the refrigerant tank.

### Advantageous effects of the invention

The terminal structure having the above-described configuration for the multiphase superconducting cable of the present invention exhibits an excellent effect in that the splice structure at the cable end can be downsized, because unlike the case of the multicore-in-one-type multiphase cable, a splitter box for splitting the end portion of the superconducting cable into individual phases is not required and one termination splice box can be used for all phases, instead of providing a termination splice box for each phase. Furthermore, an outer superconducting layer which functions as an apparent shield for an inner superconducting layer can be electrically insulated from the ground. Moreover, by providing a thermal protection structure, it is possible to sufficiently prevent heat penetration from the room temperature side.

### Brief Description of the Drawings

[Figure 1] Figure 1 is a schematic diagram showing a cross section of a multiphase superconducting cable having a plurality of concentrically disposed superconducting layers.
[Figure 2] Figure 2 is a schematic diagram showing a terminal structure of a multiphase superconducting cable according to the present invention.
[Figure 3(A)] Figure 3(A) is a schematic diagram showing a structure of fixing portion in the connection of superconducting layers and leads.
[Figure 3(B)] Figure 3(B) is a schematic diagram of a lead.
[Figure 4] Figure 4 is schematic top view showing the arrangement of leads in an insulating member.
[Figure 5] Figure 5 is a schematic diagram showing a cross section of a three-core-in-one-type three-phase superconducting cable.
[Figure 6] Figure 6 is a schematic diagram showing a splice structure of a three-core-in-one-type three-phase superconducting cable, for connection with a room temperature side.
[Figure 7] Figure 7 is a schematic diagram showing a terminal structure of a three-core-in-one-type three-phase superconducting cable.

### Reference Numerals

- 1: multiphase superconducting cable
- 2: cable core
- 3: former
- 4: superconducting layer
- 4a: first conducting layer
- 4b: second conducting layer
- 4c: third conducting layer
- 5: conductor-insulation layer
- 5a: first conductor-insulation layer
- 5b: second conductor-insulation layer
- 5c: third conductor-insulation layer
- 6: cable shielding layer
- 7: protective layer
- 10: refrigerant tank
- 10a: refrigerant
- 20: lead
- 21, 21a to 21c: sleeve
- 22a: hole
- 22b: fixing part
- 23: coupling member
- 24: fixing member
- 30: insulating member
- 31,32: flange
- 40: heat insulation tank
- 41: main body
- 42: cover
- 50: porcelain tubular insulator
- 51: upper shield
- 52: dielectric fluid
- 100: three-core-in-one-type multiphase superconducting cable
- 101: thermal insulation pipe
- 101a: outer pipe
- 101b: inner pipe
- 102: cable core
- 103: space
- 104: anticorrosion layer
- 110a: conductor
- 110b: insulating bushing
- 111: refrigerant tank
- 111a: refrigerant
- 112: vacuum vessel
- 113: porcelain tubular insulator
- 113a: dielectric fluid
- 114: current lead bar
- 115: joint
- 116: current lead bar coolant vessel
- 117: current lead bar vacuum vessel
- 200: former
- 201: superconducting layer
- 202: electrical insulation layer
- 203: cable shielding layer
- 204: protective layer
- 210: splitter box
- 220: thermal insulation pipe
- 230: termination splice box
- 240: connecting cable
- 250: room temperature side splice box

### Best Mode for Carrying Out the Invention

The present invention will be described in more details below.
In the present invention, a multiphase superconducting cable includes a plurality of concentrically disposed superconducting layers with a conductor-insulation layer disposed between adjacent superconducting layers. Specifically, it is advisable to construct in a configuration such that superconducting layers and conductor-insulation layers are alternately arranged in the enumerated order from the center: a first conducting layer composed of a superconducting material, a first conductor-insulation layer composed of an insulating material, a second conducting layer composed of the same material, a second conductor-insulation layer composed of the same material, a third conducting layer composed of the same material, a third conductor-insulation layer composed of the same material, .....

The superconducting layer may be formed by spirally winding, in single-layered or multilayered structure, a wire composed of a Bi2223-based superconducting material, for example. When a multilayered structure is adopted, an insulating interlayer may be provided. The insulating interlayer may be formed, for example, by winding insulating paper, such as kraft paper, or semisynthetic insulating paper, such as PPLP (Registered Trademark: polypropylene-laminated paper manufactured by Sumitomo Electric Industries, Ltd.). The first conducting layer may be formed by being wound around the periphery of a former. The second and subsequent conducting layers may be formed by winding around the outer periphery of the respective preceding conductor-insulation layer. The conductor-insulation layer may be formed by winding semisynthetic insulating paper, such as PPLP (Registered Trademark), or insulating paper, such as kraft paper, in a manner such that the insulating strength needed for achieving insulation between phases can be provided. A cable shielding layer which has the same structure as that of the outer superconducting layer may be provided around the periphery of the outermost conductor-insulation layer. A protective layer may be provided around the periphery of the cable shielding layer.

A cable core is made by forming a former, the above- described superconducting layers and conductor-insulation layers, and as necessary, a cable shielding layer and a protective layer in the enumerated order. The core thus made is placed in a thermal insulation pipe to constitute a coaxial-type multiphase superconducting cable. The thermal insulation pipe, for example, has a double pipe structure composed of an inner pipe and an outer pipe, and a heat insulator is disposed in a space between the inner and outer pipes, which space is evacuated. A refrigerant, such as liquid nitrogen, for cooling the cable core is filled inside the inner pipe. An anticorrosion layer composed of a resin, such as polyvinyl chloride, may be provided around the periphery of the thermal insulation pipe. The cross-sectional area of the multiphase superconducting cable having concentrically arranged superconducting layers can be decreased as compared with the conventional multicore-in-one-type multiphase superconducting cable, and the size of the cable itself can be reduced. Furthermore, it is advantageous that the coaxial-type multiphase superconducting cable exhibits smaller power transmission loss as compared with the multicore-in-one-type superconducting cable.

When a superconducting cable is connected to the room temperature side, the superconducting layers at the end of the cable must be cooled to cryogenic temperature. Therefore, the terminal structure of the present invention has a refrigerant tank for cooling the superconducting layers at the end portion of the cable so that the cryogenic state can be maintained. The refrigerant tank is filled with a refrigerant, such as liquid nitrogen. Preferably, a thermal insulation tank having a thermal protection structure is provided around the outer periphery of the refrigerant tank. The refrigerant tank and the thermal insulation tank are each preferably composed of a metal having excellent strength, such as stainless steel.

Leads are electrically connected to the ends of the superconducting layers such that electricity can be extracted for each phase at the room temperature side. That is, electric power can be transmitted through the leads between the cryogenic temperature side and the room temperature side. If the superconducting layers are drawn out to the outside without providing the leads in the case where the superconducting layers are each formed by winding a wire composed of a superconducting material, the refrigerant impregnated into the superconducting layers leaks outside traveling through the superconducting layers. In contrast, in the terminal structure of the present invention, the leakage of the refrigerant can be prevented by providing the leads. The leads are composed of a conductive material. One end of each lead, which end is connected to the superconducting layer, is disposed in the refrigerant tank, and contacts with the refrigerant. Therefore, the leads may be composed of a material having low electrical resistance even at a temperature in the vicinity of a refrigerant temperature: for example, when liquid nitrogen is used as a refrigerant, a metal of normal conduction, such as copper or aluminum (in either case, the resistivity ρ at 77 K = 2 × 10-7 Ω·cm), which exhibits low electrical resistance even in the vicinity of the temperature of the liquid nitrogen.

As described above, since the leads are composed of a conductive material, the leads must be insulated from each other. Therefore, an insulating member is disposed around the outer peripheries of the leads so as to achieve insulation between the phases. The leads are arranged in the insulating member such that the distance required for insulation between the phases can be retained. In the case of a three-phase AC cable, for example, currents are caused to flow with phases differing by 120° in the individual superconducting layers, and accordingly the leads have electric potentials with phases differing by 120°. Consequently, the second conducting layer, which has an electric potential with a phase difference of 120° with respect to the first conducting layer located at the innermost position, functions as an apparent shielding layer. Likewise, the third conducting layer having an electric potential with a phase difference of 120° with respect to the second conducting layer functions as an apparent shielding layer. Usually, a shielding layer is grounded. However, it is necessary to provide the second conducting layer and the third conducting layer with electrical insulation from the ground since they have high potentials with respect to the ground because of large currents caused to flow therein. In the present invention, by disposing the insulating member around the outer peripheries of the leads as described above, the second conducting layer and the third conducting layer which are connected to the leads can be electrically insulated from the ground. Such an insulating member may have any structure that can achieve insulation between the phases and insulation against the ground, and may be composed of an insulating material, such as an epoxy resin or a fiberglass-reinforced plastic (FRP), for example. The insulating member may be prepared separately and attached on the leads, or may be formed integrally with the leads.

In the present invention, the insulating member also functions as a seal of the refrigerant tank. Such a configuration makes it possible not only to achieve the insulation between phases and the insulation against the ground, but also to prevent the refrigerant from leaking out of the refrigerant tank. Sealing of the refrigerant tank may be accomplished by the following method, for example: the refrigerant tank is formed in a tubular shape; and an opening of the refrigerant tank is sealed with an insulating member formed so as to be fitted into the opening.

The other end of each lead drawn out from the insulating member and placed on the outside may be placed in a porcelain tubular insulator filled with a dielectric fluid, such as SF6 or an insulating oil, or in a tubular insulator composed of an epoxy resin or the like.

The lead may be directly attached to the superconducting layer, for example, with a solder or the like. In such a case, if an ordinary solder (melting point: about 190°C) is used, the insulating property of the conductor-insulation layer is likely to be degraded due to heat of fusion. Therefore, a low-temperature solder may be used. Specifically, a solder having a melting point lower than the allowable temperature limit of the conductor-insulation layer may be used. The lead may be structured so as to be attached to at least a part of the superconducting layer, or otherwise, to be connected to a sleeve which is composed of a conductive material and which is disposed so as to cover the outer periphery of the superconducting layer. It is preferable to use a sleeve, particularly, for the superconducting layer disposed at the outer side, since the outer diameter of the superconducting layers becomes larger. The sleeve is electrically connected to the superconducting layer, and the connection may be made, using the above-mentioned solder having low melting point, or the like, for example. Since the sleeve is disposed in the refrigerant tank and contacts with the refrigerant, the sleeve may be composed of an ordinary conductive material, such as copper or aluminum, as in the case of the lead, that has low resistance even at cryogenic temperature. The sleeve has preferably a shape that enables electrical connection to as many superconducting wires as possible, particularly in the case where a superconducting layer is composed of a plurality of superconducting wires. For example, the sleeve may have a tubular shape, such as a cylindrical shape that makes it possible to cover the whole outer periphery of the superconducting layer. In order to make the sleeve to be easily attached around the outer periphery of the superconducting layer, it is preferable to employ a structure in which a tubular sleeve are formed by combining parts into a tube. For example, in the case of a cylindrical sleeve, it may be structured such that parts having a cross-section of circular arc are combined to form a sleeve of a cylindrical shape: specifically two equal parts having a semicircular cross-section may be combined. For the purpose of ease of mounting, it is preferable to form a plurality of through holes in the wall of a sleeve, extending from the outer surface to the inner surface, and to connect the sleeve to the superconducting layer by flowing the solder or the like through the holes.

Preferably, a thermal protection structure is provided around the outer periphery of the refrigerant tank and the outer periphery of the insulating member (in particular, at the portions protruding from the refrigerant tank) so as to prevent the heat of the room temperature side from penetrating into the refrigerant tank side. For example, a heat insulator may be disposed around the outer peripheries of the refrigerant tank and the insulating member, and a heat insulation tank may be disposed so as to cover the outer peripheries thereof. The inside of the heat insulation tank may be evacuated to enhance the heat-insulation properties.

Embodiments of the present invention will be described with reference to the drawings below. Note that the scales in the drawings do not necessarily correspond to those in the description.

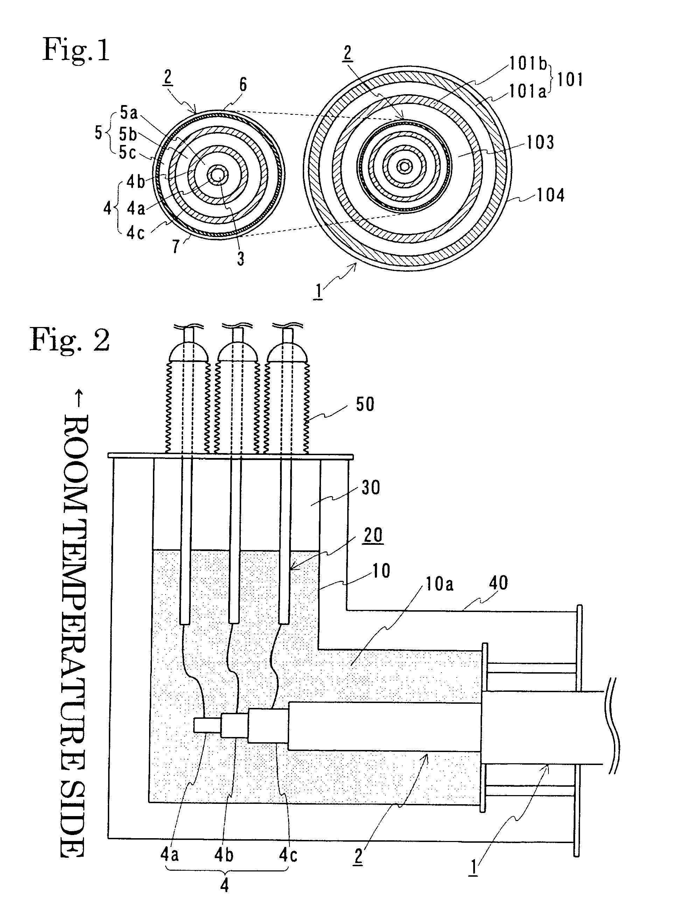

Figure 1 is a schematic diagram showing a cross section of a multiphase superconducting cable including a plurality of superconducting layers which are concentrically disposed, and Figure 2 is a schematic diagram showing a terminal structure of a multiphase superconducting cable according to the present invention. The terminal structure of the multiphase superconducting cable according to the present invention is suitable for being provided between the end of a multiphase superconducting cable 1 and a room temperature side, and in particular, the multiphase superconducting cable is a coaxial-type multiphase cable having a plurality of concentrically disposed superconducting layers 4 through which currents of different phases flow. The terminal structure shown in this example includes a refrigerant tank 10 filled with a refrigerant 10a for cooling the ends of the three superconducting layers 4, leads 20 electrically connected to the ends of the superconducting layers 4, respectively, and an insulating member 30 which is arranged around the outer peripheries of the leads 2 and which seals the refrigerant 10a in the refrigerant tank 10. A heat insulation tank 40 is provided around the periphery of the refrigerant tank 10 and the periphery of the insulating member 30. A porcelain tubular insulator 50 is provided on the room temperature side of each lead 20. The individual constituent elements will be described below in more detail.

### <Multiphase superconducting cable>

The multiphase superconducting cable 1 used in this example is, as shown in Fig. 1, a three-phase superconducting cable including coaxially disposed three superconducting layers 4 through which currents of three different phases are to flow, and a cable core 2 thereof is accommodated in a thermal insulation pipe 101. The thermal insulation pipe 101 has a double pipe structure including an outer pipe 101a and an inner pipe 101b, a heat insulator (not shown) being disposed in a space between the outer and the inner pipes, and the space is evacuated. The cable core 2 includes a former 3, a first conducting layer 4a, a first conductor-insulation layer 5a, a second conducting layer 4b, a second conductor-insulation layer 5b, a third conducting layer 4c, a third conductor-insulation layer 5c, a cable shielding layer 6, and a protective layer 7, which are disposed in that order from the center, and a space 103 defined by the inner pipe 101b and the cable core 2 serves as a channel for a coolant, such as liquid nitrogen.

The conducting layers 4a to 4c and the cable shielding layer 6 were each formed of a Bi2223-based superconducting tape wire (Ag-Mn sheathed wire). The first conducting layer 4a, the second conducting layer 4b, the third conducting layer 4c, and the cable shielding layer 6 were spirally wound in a multilayered manner around the peripheries of the former 3, the first conductor-insulation layer 5a, the second conductor-insulation layer 5b, and the third conductor-insulation layer 5c, respectively. The first conductor-insulation layer 5a, the second conductor-insulation layer 5b, and the third conductor-insulation layer 5c were formed by winding semisynthetic insulating paper (PPLP: Registered Trademark; manufactured by Sumitomo Electric Industries, Ltd.) around the peripheries of the first conducting layer 4a, the second conducting layer 4b, and the third conducting layer 4c, respectively. The former 3 was prepared by stranding a plurality of insulation-coated copper wires. The protective layer 7 was formed by winding kraft paper around the periphery of the cable shielding layer 6. The thermal insulation pipe 101 was prepared in a vacuum multilayered thermal protection structure such that heat insulators were provided in layers and evacuation was done between an outer pipe 101b and an inner pipe 101a, which were SUS corrugated pipes. An anticorrosion layer 104 composed of polyvinyl chloride was formed around the periphery of the thermal insulation pipe 101.

Such a multiphase superconducting cable 1 is advantageous in that the cross-sectional area is smaller and power transmission loss is less as compared with the known three-core-in-one-type multiphase superconducting cable shown Fig. 5. Furthermore, as will be described below, the splice structure at the cable end, in which connection with a room temperature side is done, can also be downsized.

### <Terminal structure>

### (Refrigerant tank)

The multiphase superconducting cable 1 must also maintain the superconducting state at the end portion thereof. Therefore, the end portion of the multiphase superconducting cable 1, which end portion is connected to the room temperature side, is placed in a refrigerant 10 filled with a refrigerant 10a. Specifically, the end portion of the cable core 2 is drawn out from the multiphase superconducting cable 1 and introduced into the refrigerant tank 10. In this example, the refrigerant tank 10 was composed of stainless steel, and liquid nitrogen was used as the refrigerant 10a.

### (Lead)

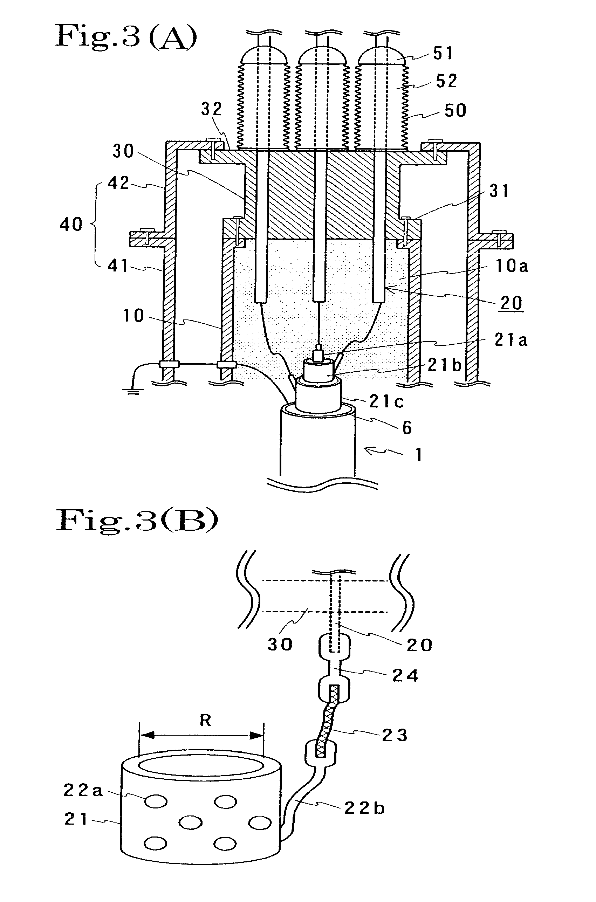

The end of the cable core 2 introduced into the refrigerant tank 10 is stripped stepwise to expose the individual superconducting layers 4, and a lead 20 composed of a conductive material is attached to each superconducting layer 4 so as to make electrical connection to the room temperature side. Figure 3(A) is a schematic diagram showing a fixing portion between superconducting layers and leads, and Figure 3(B) is a schematic diagram of a lead structure. The leads 20 shown in this example are bar-shaped and composed of copper. One end of each lead 20 is introduced into the refrigerant tank 10 so as to be connected to a corresponding superconducting layer, and the other end protrudes from the refrigerant tank 10 and the heat insulation tank 40 so as to be connected to a device or the like at the room temperature side. A porcelain tubular insulator 50 is disposed around the periphery of the exposed end of each lead 20. The power transmission between the cryogenic temperature side and the room temperature side is done through the leads 20.

The leads 20 may be directly attached to the individual superconducting layers. In this example, a sleeve 21 composed of a conductive material is disposed around the periphery of each superconducting layer, and the lead 20 is attached to the sleeve 21.

### (Sleeve)

In this example, sleeves 21a to 21c which are disposed respectively around the peripheries of the individual superconducting layers are composed of copper as in the case of the leads 20. The sleeve was designed to have a cylindrical form with an inner diameter R matching the outer diameter of each superconducting layer. In this example, in order to facilitate fixing to the superconducting layer, the sleeve used had a structure in which two equal parts having a semicircular cross-section were combined to form a cylindrical sleeve. In the wall of the sleeve 21, a plurality of through holes 22a were formed extending from the outer surface to the inner surface. By putting a solder into the through holes 22a, the sleeve 21 is electrically connected to the superconducting layer, and also fixed to the superconducting layer. In this example, a solder having low melting point, specifically, a melting point of about 79°C (chemical composition; Sn: 17% by mass, Bi: 57% by mass; In: 26% by mass) was used. The sleeve 21 is also provided with a fixing part 22b for connection with the lead 20.

### (Coupling member and fixing member)

In this example, the lead 20 and the sleeve 21 were structured to be connected, not directly to each other, but through a coupling member 23 and a fixing member 24. The coupling member 23 and the fixing member 24 are each composed of copper. The coupling member 23 is formed of a braided material. The fixing member 24 is a block having holes at both ends. The sleeve 21 is also provided with a fixing part 22b to which the coupling member 23 is attached. The lead 20 and the sleeve 21 are attached to each other as follows. One end of the coupling member 23 is inserted into a hole of the fixing part 22b of the sleeve 21 and compression is performed. On the other hand, one end of the lead 20 is inserted into one hole of the fixing member 24 and compression is performed. The other end of the coupling member 23 is inserted into the other hole of the fixing member 24 and compression is performed. Thus, the lead 20 and the sleeve 21 are connected to each other. Since the coupling member 23 formed of a flexible braded material is used, the lead 20 and the sleeve 21 can be easily connected, and even if the position of the superconducting layer is moved due to thermal shrinkage, the movement can be absorbed by deformation of the coupling member 23.

### (Insulating member)

An insulating member 30 for insulation between the phases is disposed around the peripheries of the leads 20. Figure4 is a schematic top view showing the arrangement of leads in the insulating member. In this example, the leads 20 were arranged such that the distance required for the phase insulation was retained. Specifically, as shown in Fig. 4, the leads 20 were arranged such that the centers of the leads 20 were positioned at the apexes of an equilateral triangle.

When the three-phase cable shown in this example is used for AC power transmission, the second conducting layer functions as an apparent shield with respect to the first conducting layer, and the third conducting layer functions as an apparent shield with respect to the second conducting layer. The cable shielding layer 6 functions as an apparent shield with respect to the third conducting layer. Usually, since a shielding layer is grounded, the cable shielding layer 6 is grounded through the refrigerant tank 10 and the heat insulation tank 40 shown in Fig. 3(A). However, the second conducting layer and the third conducting layer have high potentials with respect to ground. Therefore, these superconducting layers must be electrically insulated from ground. In the present invention, since the insulating member 30 is disposed around the peripheries of the leads 20 as described above, the second conducting layer and the third conducting layer are electrically insulated from the ground by the leads 20.

Such an insulating member 30 was formed of an epoxy resin. In this example, the insulating member 30 was formed integrally with the three leads 20. Specifically, the insulating member 30 has a cylindrical shape as shown in Fig. 3(A), and flanges 31 and 32 are provided on both ends of the insulating member 30. The flange 31 is a part to which the refrigerant tank 10 is fixed, and the flange 32 is a part to which the heat insulation tank 40 is fixed. By placing the flange 31 at the opening of the refrigerant tank 10 and fixing the insulating member 30 with metal fittings, such as bolts, the refrigerant 10a in the refrigerant tank 10 can be sealed. In this way, the insulating member 30 also functions as a sealing material for the refrigerant tank 10. Likewise, by fixing the flange 32 and the heat insulation tank 40 (cover 42) with metal fittings, such as bolts, the insulating member 30 is fixed in the heat insulation tank 40.

### (Heat insulation tank)

In order to prevent heat from entering the refrigerant tank 10 from the outside, a heat insulation tank 40 is provided around the periphery of the refrigerant tank 10 and the periphery of the insulating member 30. In this example, the heat insulation tank 40 is composed of stainless steel, and has a dividable structure including a main body 41 and a cover 42 detachable from the main body 41. The boundary between the main body 41 and the cover 42 is on a level with the boundary between the insulating member 30 and the refrigerant tank 10. In this example, the cover 42 has a tubular shape, and the leads 20 can be protruded from one opening of the cover 42. Because of such a shape, when the insulating member 30 provided with the leads 20 is fixed to the refrigerant tank 10 and then the cover 42 is disposed so as to cover the insulating member 30, the leads 20 protrude from one opening of the cover 42. In order to fix the cover 42 to the main body 41, flanges were provided at the openings of the cover 42 and the main body 41, and these flanges were aligned and clamped with metal fittings, such as bolts. The cover 42 at the side from which the leads 20 protrude is fixed to the insulating member 30 with metal fittings, such as bolts. A heat insulator (not shown) is disposed around the periphery of the refrigerant tank 10 and the periphery of the insulating member 30, and a vacuum is produced in the heat insulation tank 40 to enhance heat-insulating properties.

### (Porcelain tubular insulator)

A porcelain tubular insulator 50 is disposed surrounding the outer periphery of the room temperature portion of each lead 20 protruding from the insulating member 30. An upper shield 51 is disposed on the opening of the porcelain tubular insulator 50. The porcelain tubular insulator 50 is filled with a dielectric fluid 52, such as an insulating oil. Although the porcelain tubular insulator is disposed in this example, a tubular insulator composed of an epoxy resin or the like may be used.

### <Advantages>

In the terminal structure of the coaxial-type three-phase superconducting cable having the configuration described above, the size of the terminal splice structure can be reduced as compared with the case of the three-core-in-one-type terminal structure, since no splitter box is required and the connection of the three phases to the room temperature side can be achieved with one termination splice box.

### Industrial Applicability

The terminal structure of the present invention is most suitably used for a junction between a cryogenic temperature side and a room temperature side. The terminal structure may also be used for the junction with a room temperature side in a power line where power transmission is implemented via a superconducting cable.

## Claims

1. A terminal structure of a multiphase superconducting cable, comprising :
a refrigerant tank (10) filled with a refrigerant (10a) for cooling the ends of the multiphase superconducting cable having a plurality of concentrically disposed superconducting layers (4) for flowing currents of different phases, the superconducting layers being separated from each other by conductor insulation layers (5) ;
leads (20) electrically connected to the ends of the respective superconducting layers; and
an insulating member (30) disposed around the peripheries of the leads, the insulating member sealing the refrigerant in the refrigerant tank.

2. A terminal structure of a multiphase superconducting cable according to claim 1, wherein a sleeve (21) composed of a conductive material is disposed covering the outer periphery of each superconducting layer and electrically connected to the superconducting layer, and each lead is attached to the sleeve.

## Patentansprüche

1. Anschlußstruktur eines supraleitenden Mehrphasenkabels, umfassend:
einen Kühlmitteltank (10), der mit einem Kühlmittel (10a) zum Kühlen der Enden des supraleitenden Mehrphasenkabels, das eine Vielzahl von konzentrisch angeordneten supraleitenden Schichten (4) zum Leiten von Strömen verschiedener Phasen aufweist, befüllt ist, wobei die supraleitenden Schichten voneinander durch Leitungsisolationsschichten (5) separiert sind,
Anschlußdrähte (20), die elektrisch mit den Enden der entsprechenden supraleitenden Schichten verbunden sind, und
ein isolierendes Bauelement (30), das um die Umfänge der Anschlußdrähte angeordnet ist, wobei das isolierende Bauelement das Kühlmittel in dem Kühlmitteltank verschließt.

2. Anschlußstruktur eines supraleitenden Mehrphasenkabels nach Anspruch 1, wobei eine aus einem leitenden Material erstellte Hülse (21) den äußeren Umfang jeder supraleitenden Schicht abdeckend angeordnet und elektrisch mit der supraleitenden Schicht verbunden ist und wobei jeder Anschlußdraht an der Hülse befestigt ist.

## Revendications

1. Structure terminale d'un câble supraconducteur multiphasé comprenant :
un réservoir de réfrigérant (10) rempli d'un réfrigérant (10a) pour refroidir les extrémités du câble supraconducteur multiphasé ayant une pluralité de couches supraconductrices (4) disposées de manière concentrique pour faire circuler des courants de phases différentes, les couches supraconductrices étant séparées les unes des autres par des couches d'isolation de conducteur (5) ;
des bornes (20) reliées électriquement aux extrémités des couches supraconductrices respectives ; et
un membre isolant (30) disposé autour des périphéries des bornes, le membre isolant enfermant de manière étanche le réfrigérant dans le réservoir de réfrigérant.

2. Structure terminale d'un câble supraconducteur multiphasé selon la revendication 1, où une gaine (21) composée d'un matériau conducteur est disposée de manière à couvrir la périphérie externe de chaque couche supraconductrice et est reliée électriquement à la couche supraconductrice, et chaque borne est fixée à la gaine.
